# FASCICULE DE BREVET EUROPEEN

(11) **EP 1 087 096 B1**
(45) Date de publication et mention de la délivrance du brevet: **22.06.2005**
(21) Numéro de dépôt: 00420194.3
(22) Date de dépôt: 20.09.2000
(51) Int. Cl.: E06B 9/74, E06B 9/68, F16C 1/12

(54) **Dispositif d'actionnement d'un organe de débrayage pour un motoréducteur d'entraînement d'une installation de fermeture ou de protection solaire**
Betätigungseinrichtung einer Entkupplungsvorrichtung für einen Getriebemotorantrieb einer Schliess- oder Sonnenschutzeinrichtung
Actuator of a decoupling device for a geared motor drive of a closure device or a solar protection installation

(30) Priorité: 23.09.1999 FR 9912099
(43) Date de publication de la demande: 28.03.2001
(73) Titulaire: SIMU, 70100 Arc-Les-Gray (FR)
(72) Inventeur: Lienhardt, Clotilde, 70100 Gray (FR)
(74) Mandataire: Myon, Gérard Jean-Pierre

(56) Documents cités:
- EP-A- 0 597 780
- GB-A- 2 215 801
- GB-A- 2 310 020

## Description

L'invention a trait à une installation de feremture ou de protection solaire comprenant, entre autres un dispositif d'actionnement d'un organe de débrayage pour un motoréducteur d'entraînement en rotation d'un tube d'enroulement.

Par installation de fermeture, on entend les portes, portails, volets et matériels équivalents.

Il est connu d'utiliser un moteur électrique pour entraîner en rotation un arbre d'enroulement d'un tablier de porte ou de volet ou un store de protection solaire. Il est également connu, par exemple de EP-A-0 597 780, de prévoir une épingle élastique de débrayage d'un tel motoréducteur afin de permettre sa manoeuvre manuelle, notamment en cas de panne d'alimentation électrique. L'épingle ou organe de débrayage est commandé grâce à un câble gainé relié à un dispositif d'actionnement. En agissant sur le dispositif d'actionnement, l'utilisateur tire au moyen du câble sur l'organe de débrayage du motoréducteur, ce qui permet de le désaccoupler du tube d'enroulement précité. D'autres types d'organes de débrayage sont également connus de la technique entérieure, notamment des organes de libération d'un frein associé au motoréducteur tels que décrits dans FR-A-2 612 246.

Par ailleurs, il est connu de FR-A-2 647 152 de réaliser un levier de débrayage de type "à course définie". En fonction de la longueur de la gaine du câble et de son cheminement qui peut être rectiligne ou tortueux selon les configurations d'installation, la course nécessaire au niveau du dispositif d'actionnement pour passer d'une situation embrayée à une situation débrayée au niveau du motoréducteur est différente. En d'autres termes, la position du dispositif d'actionnement qui correspond effectivement à une situation débrayée du motoréducteur varie d'une installation à l'autre, sauf à prévoir un réglage précis, lequel se révèle long, fastidieux et susceptible de dérive au cours du temps. En pratique, un utilisateur prend généralement une marge de manoeuvre en forçant sur le dispositif d'actionnement jusqu'à sentir un effort résistant, au risque de détériorer l'organe de débrayage et d'accentuer une éventuelle dérive du réglage du dispositif d'actionnement au point de ne plus pouvoir obtenir de débrayage après plusieurs utilisations.

C'est à ces problèmes qu'entend plus particulièrement remédier l'invention en proposant un dispositif d'actionnement dont la course correspondant au débrayage est automatiquement adaptée à la configuration de l'installation de fermeture ou de protection solaire.

Dans cet esprit, l'invention concerne une installation du type précité dont le dispositif d'actionnement de l'organe de débrayage comprend au moins un élément élastique exerçant sur le câble reliant l'organe de débrayage au dispositif d'actionnement un effort calibré, en fonction de la configuration de ce dispositif d'actionnement.

Grâce à l'invention, l'organe de débrayage délivre un effort calibré sur le câble, cet effort étant indépendant du cheminement de la gaine entourant le câble.

Selon des aspects avantageux mais non obligatoires de l'invention, le dispositif d'actionnement de l'installation incorpore une ou plusieurs des caractéristiques suivantes :
- Il porte des moyens de signalisation permettant à un utilisateur de savoir que l'effort calibré précité est effectivement exercé sur le câble. Grâce à ces moyens, l'utilisateur sait quand arrêter la manoeuvre du dispositif d'actionnement, de sorte qu'il ne risque pas de forcer sur le dispositif d'actionnement et/ou l'organe de débrayage au point de les détériorer.
- Il comprend deux composants mobiles l'un par rapport à l'autre, une gaine entourant le câble étant reliée à un premier composant alors que le câble est apte à être déplacé par rapport à la gaine par le second composant, l'élément élastique étant apte à exercer sur le câble un effort variable en fonction de la position relative de ces deux composants. Dans ce cas, ces composants sont avantageusement mobiles l'un par rapport à l'autre grâce à une liaison de type vis/écrou, des moyens étant prévus pour le repérage d'un déplacement relatif de ces composants avec une course prédéterminée. Compte tenu du fait que l'élément élastique est apte à exercer un effort sur le câble qui dépend de la position relative des deux composants, le fait de repérer la position de ces deux composants permet en fait de repérer l'effort exercé sur le câble, de telle sorte qu'un utilisateur sait quand limiter ou arrêter l'actionnement du dispositif.

Selon une première variante de réalisation de l'invention, le dispositif comprend un premier composant formant une surface de butée d'une extrémité d'une gaine entourant le câble et un second composant vissé sur ou dans le premier composant, ce second composant étant percé d'un canal longitudinal de passage du câble alors que la seconde extrémité du câble est solidaire d'un poussoir apte à comprimer un ressort hélicoïdal disposé autour du câble, sur une face du second composant opposé au premier composant. Cette construction induit une compression du ressort hélicoïdal en fonction du vissage ou du dévissage d'un composant sur l'autre, cet effort de compression étant transmis sous la forme d'un effort calibré au câble. Dans ce cas, le dispositif comprend avantageusement une coiffe entourant la seconde extrémité du câble, cette coiffe étant équipée d'une fenêtre de visualisation de la position du poussoir et/ou d'un élément associé, par rapport à la face précitée du second composant.

Selon un second mode de réalisation de l'invention, le dispositif comprend un premier composant formant surface de butée d'une extrémité d'une gaine entourant le câble et un second composant solidaire de la seconde extrémité de ce câble, ces premier et second composants étant vissés, par des moyens reliés à l'un des composants et chargés radialement en direction d'un filet ou d'un taraudage prévu sur l'autre composant. Ces moyens peuvent être des billes montées sur l'un des composants formant écrou et chargés radialement vers l'axe de symétrie du filet, de façon à coopérer avec ce filet prévu sur l'autre composant. Il est également possible de prévoir au moins un coin de forme extérieure globalement tronconique chargé élastiquement, selon une direction parallèle à un axe longitudinal d'un filet de l'un des composants, contre une surface tronconique complémentaire de l'autre composant. Dans tous les cas, en fonction du vissage ou du dévissage des premier et second composants entre eux, l'effort exercé sur les billes ou sur les coins a pour effet de résister à l'effort de tension du câble jusqu'à une certaine valeur, puis de laisser se déplacer les billes ou les coins dans une direction telle que les filets et taraudages respectifs des premier et second composants ne coopèrent plus. Il n'est alors plus possible de faire subir un déplacement relatif supplémentaire à ces composants, ce qui permet de calibrer l'effort de tension exercé sur le câble.

Selon un troisième mode de réalisation de l'invention, un premier composant, formant surface de butée d'une extrémité d'une gaine entourant le câble et pourvu d'un alésage central de coulissement d'un piston cinématiquement lié à la seconde extrémité du câble, est associé à un second composant apte à être vissé sur ou dans le piston, alors qu'un ressort de compression est disposé entre ces premier et second composants. Le piston est déplacé dans l'alésage central du premier composant du fait de son vissage dans le second composant, ce qui a pour effet d'exercer un effort de tension sur le câble qui permet la commande de l'organe de débrayage. Cette tension est utilisée pour comprimer le ressort qui s'oppose à un coulissement relatif des premier et second éléments. Au fur et à mesure que le ressort est comprimé, c'est-à-dire au furet-à-mesure que l'effort exercé sur et à travers le câble augmente, le déplacement relatif des premier et second composants est perceptible pour l'utilisateur qui sait alors qu'un effort de traction suffisant est exercé sur l'organe de débrayage. Le piston est guidé en translation dans l'alésage sans possibilité de rotation par rapport au premier composant. L'un des composants porte une marque de repérage du déplacement relatif du second composant, ce qui facilite la perception qu'a l'utilisateur du fait qu'un effort calibré est exercé sur le câble. Avanta-geusement, les composants sont pourvus de dentures prévues pour venir en prise ou en butée en fonction d'un déplacement relatif de ces composants. Ceci permet également à un utilisateur de repérer qu'un effort suffisant est exercé sur le câble lorsque ces dentures engrènent et font un cliquetis ou engrènent au point de se bloquer mutuellement. Selon un autre aspect avantageux, le ressort de compression peut être en appui contre une rondelle disposée autour du piston et contre une surface de l'un des composants en regard de l'autre composant, cette rondelle ayant pour effet d'éviter que le ressort ne griffe ou ne se plante dans l'une des surfaces en regard des composants.

Quel que soit le mode de réalisation considéré, on peut prévoir que le dispositif d'actionnement de l'installation comprend des moyens de réglage de la valeur de l'effort calibré, ce qui confère une grande adaptabilité au dispositif de l'invention.

L'invention sera mieux comprise et d'autres avantages de celle-ci apparaîtront plus clairement à la lumière de la description qui va suivre de cinq modes de réalisation d'un dispositif d'actionnement d'une instalaltion conforme à son principe, donnée uniquement à titre d'exemple et faite en référence aux dessins annexés dans lesquels :
- La figure 1 est une vue en perspective éclatée d'un dispositif conforme à un premier mode de réalisation de l'invention ;
- La figure 2 est une coupe longitudinale du dispositif de la figure 1 dans une première configuration ;
- La figure 3 est une coupe analogue à la figure 2 alors que le dispositif est dans une seconde configuration ;
- La figure 4 est une coupe longitudinale partielle de principe d'un dispositif conforme à un second mode de réalisation de l'invention dans une première configuration ;
- La figure 5 est une vue analogue à la figure 4 alors que le dispositif est dans une seconde configuration ;
- La figure 6 est une coupe longitudinale partielle de principe d'un dispositif conforme à un troisième mode de réalisation de l'invention ;
- La figure 7 est une coupe selon la ligne VII-VII à la figure 6, on y a indiqué en VI-VI le plan de coupe de la figure 6 ;
- La figure 8 est une coupe longitudinale partielle de principe d'un dispositif conforme à un quatrième mode de réalisation de l'invention ;
- La figure 9 est une coupe longitudinale d'un dispositif conforme à un cinquième mode de réalisation de l'invention et
- La figure 10 est une coupe selon la ligne X-X à la figure 9.

Les dispositifs représentés sur les figures sont destinés à commander une épingle de débrayage du type décrit dans la demande de brevet européen 0 597 780, un dispositif de commande de frein, du type décrit dans FR-A-2 612 246, ou tout autre type d'organe similaire.

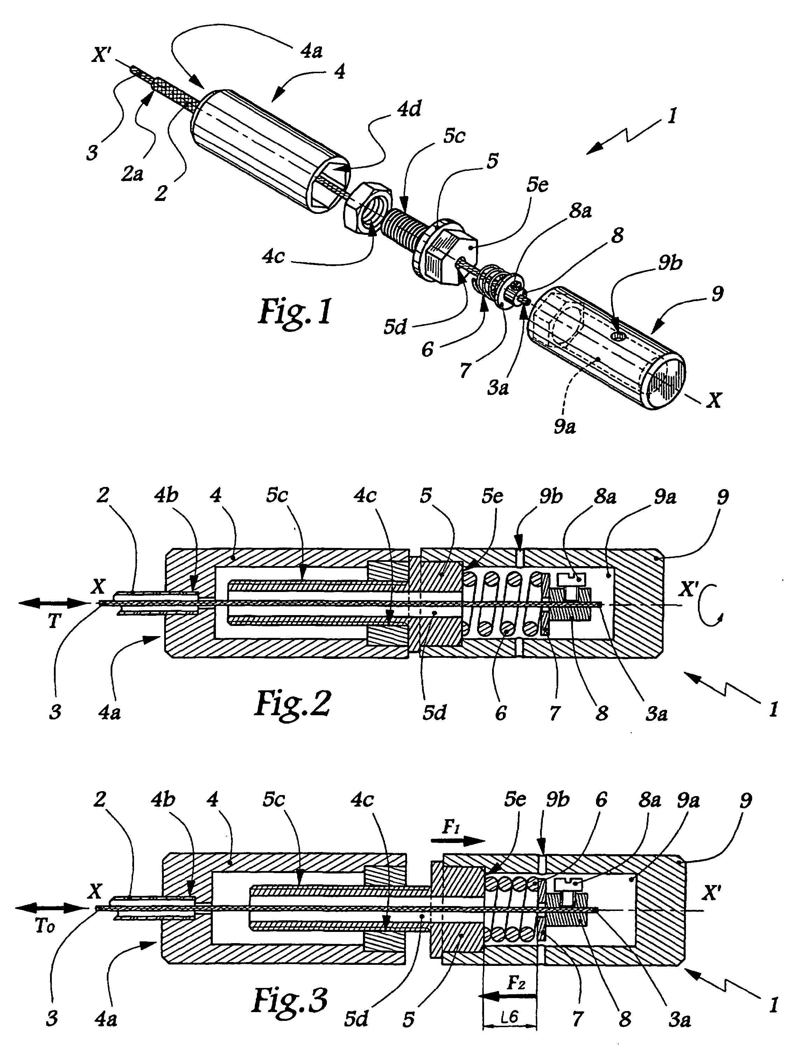

Le dispositif 1 représenté aux figures 1 à 3 est prévu pour être disposé à l'extrémité 2a d'une gaine 2 entourant un câble 3 de commande d'un tel organe de débrayage. Le dispositif 1 comprend un premier composant 4 dont une face d'extrémité 4a définit un logement 4b de réception de l'extrémité 2a de la gaine 2. Du côté opposé à sa face 4a, le composant 4 est équipé d'un écrou 4c qui est emmanché en force dans le débouché 4d du composant 4. Les éléments 4 et 4c forment ensemble une structure unitaire bi-partite.

Un second composant 5 est équipé d'un filet 5c prévu pour coopérer avec l'écrou 4c. Le composant 5 est percé d'un alésage central 5d dans lequel est introduite l'extrémité 3a du câble 3 avant de passer au centre d'un ressort hélicoïdal 6, à travers une rondelle 7 et un serre-câble 8 équipé d'une vis de blocage 8a. La vis 8a est serrée sur l'extrémité 3a du câble 3.

Une coiffe 9 est prévue pour être disposée autour des éléments 5 à 8 et de l'extrémité 3a du câble 3, cette coiffe ayant une surface interne polygonale adaptée à la surface externe polygonale du composant 5, de telle sorte qu'elle permet d'entraîner ce composant en rotation autour de son axe central X-X'.

En situation normale, c'est-à-dire lorsque le motoréducteur de l'installation est embrayé avec l'arbre correspondant, le dispositif 1 est dans la configuration de la figure 2 où le composant 5 est vissé dans le composant 4, le câble 3 n'étant pas ou étant peu tendu dans sa gaine 2.

Lorsqu'il convient de débrayer le motoréducteur, la coiffe 9 est entraînée dans un mouvement de rotation autour de l'axe X-X' commun au filet 5c et à l'écrou 4c, de telle sorte que le composant 4 est dévissé par rapport au composant 5, comme représenté par la flèche F₁ à la figure 3, ce qui a pour effet de déplacer la face 5e du second composant 5 sur laquelle est en appui le ressort 6, et par là même la rondelle 7 et le serre-câble 8, dans la même direction. L'extrémité 3a du câble 3 est ainsi déplacée à l'opposé du composant 4, ce qui a pour effet d'augmenter la tension T du câble 3 et d'exercer un effort de traction à l'extrémité opposée du câble.

Sous l'effet de cette augmentation de tension, l'effort de réaction exercé par le câble 3 sur le serre-câble 8 et la rondelle 7 a pour effet de comprimer le ressort 6, de telle sorte que la rondelle 7 est déplacée dans le sens de la flèche F₂ à la figure 3 à l'intérieur de la cavité centrale 9a de la coiffe 9.

Ainsi, plus le composant 5 est dévissé par rapport au composant 4, plus la tension T du câble 3 est importante et plus la rondelle 7 est rapprochée de la surface 5e à l'encontre de la force du ressort 6. En choisissant un ressort 6 de constante de raideur connue, il est donc possible d'exercer un effort calibré sur le câble 3, c'est-à-dire sur l'épingle de débrayage, en fonction de la position relative des éléments 5 et 7.

La coiffe 9 est percée d'une fenêtre 9b permettant de détecter le passage à son niveau de la rondelle 7, ce passage correspondant à une longueur L₆ du ressort 6 prédéterminée qui correspond elle-même à un effort de traction T₀ de valeur prédéterminée exercé sur le câble 3 par le ressort 6.

En d'autres termes, lorsque l'utilisateur voit la rondelle 7 à travers la fenêtre 9b, il sait qu'un effort adéquat, résultant du choix du ressort 6, est appliqué sur le câble 3.

Pour faciliter le repérage de la rondelle 7 à travers la fenêtre 9b, on peut prévoir que celle-ci est colorée.

Selon une variante de réalisation non représentée de l'invention, la fenêtre 9b pourrait être disposée pour permettre le repérage de la vis 8a du serre-câble 8 et, plus généralement, de tout élément cinématiquement lié à l'extrémité 3a.

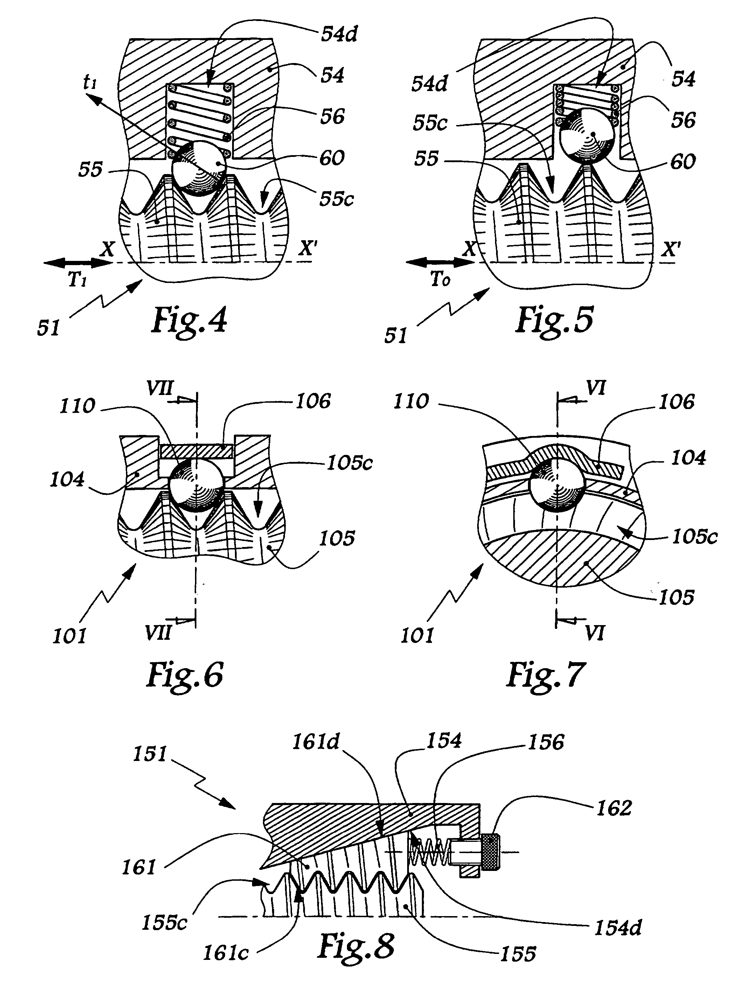

Dans le second mode de réalisation de l'invention représenté aux figures 4 et 5, des éléments analogues à ceux du premier mode de réalisation portent des références augmentées de 50. Un premier composant 54 du dispositif d'actionnement 51 est prévu pour être rendu solidaire ou servir de butée à l'extrémité d'une gaine entourant un câble dont l'extrémité est solidaire d'un second composant 55. Le composant 55 porte un filet externe 55c alors que le composant 54 porte plusieurs logements 54d de réception de ressorts 56 et de billes 60, un seul ressort 56 et une seule bille 60 étant représentés aux figures 4 et 5 étant entendu que le nombre et la répartition de ces éléments dépendent de choix de construction à la portée de l'homme du métier.

Lorsqu'on souhaite exercer un effort de traction adapté sur le câble, on visse ou on dévisse les composants 54 ou 55 l'un par rapport à l'autre, de telle sorte que le composant 55 est déplacé vers la droite des figures 4 et 5 par rapport au premier composant 54. Ceci a pour effet d'exercer sur le câble solidaire du composant 55 un effort de traction qui est équilibré par la tension du câble T₁, cette tension étant répartie au niveau des filets en des tensions élémentaires t₁ exercées sur les billes perpendiculairement aux surfaces inclinées du filet 55c.

La constante de raideur des ressorts 56 est choisie de telle sorte que, lorsque la valeur de la traction exercée sur le câble atteint une valeur prédéterminée T₀, la tension de réaction du câble est telle que les tensions élémentaires t₁ chassent les billes 60 à l'intérieur des logements 54d, de telle sorte qu'il n'est pas possible de visser ou de dévisser plus avant les composants 54 et 55 l'un par rapport à l'autre.

En d'autres termes, lorsque l'effort de traction nominal T₀ est atteint comme représenté à la figure 5, les billes 60 "sautent" une ou plusieurs dents du filet 55c sans qu'il soit possible d'exercer un effort de traction plus important, ce qui évite tout risque de détérioration de l'organe de débrayage.

Dans le troisième mode de réalisation de l'invention représenté aux figure 6 et 7, les éléments analogues à ceux du premier mode de réalisation portent des références identiques augmentées de 100. Dans ce mode de réalisation deux composants 104 et 105 sont prévus dans le dispositif d' actionnement 101 pour être respectivement reliés à une gaine et à un câble comme dans le mode de réalisation précédent, le composant 105 comportant un filet externe 105c avec lequel est ou sont susceptibles de coopérer une ou plusieurs billes 110. Ce mode de réalisation diffère du précédent en ce que l'effort élastique exercé sur les billes 110 est généré par un ressort en forme de lame 106, ce ressort pouvant éventuellement être associé à plusieurs billes 110.

Comme précédemment, la constante de raideur du ressort 106 est choisie pour que des billes 110 "sautent" des dents du filet 105c lorsque la tension du câble atteint une valeur prédéterminée.

Dans les second et troisième mode de réalisation, les ressorts 56 et 106 exercent sur les billes 110 un effort centripète en direction de l'axe X-X' du filet 55c ou 105c qui est vaincu lorsque la traction nominale à exercer sur le câble est atteinte du fait du déplacement relatif des premier et second composants.

Selon une autre variante non représentée de l'invention et en procédant par inversion de structure, des billes peuvent être prévus sur un composant à visser dans un taraudage de l'autre composant, ces billes étant chargées radialement vers l'extérieur par un ou des ressorts.

Dans le quatrième mode de réalisation de l'invention représenté à la figure 8, les éléments analogues à ceux du premier mode de réalisation portent des références identiques augmentées de 150. Dans ce dispositif d'actionnement 151, un premier composant 154 est disposé autour d'un second composant 155 qui est pourvu d'un filet externe 155c. Plusieurs coins 161 sont répartis autour de l'axe central X-X' du filet 155c. Ces coins sont chacun pourvus d'un taraudage interne 161c adapté pour coopérer avec le filet 155c alors que leur surface extérieure 161b est tronconique et qu'une surface tronconique de forme complémentaire 154d est prévue sur le composant 154, autour du composant 155c. Un ressort hélicoïdal 156 est associé à chaque coin 161. Comme précédemment, lorsque l'effort de traction exercé sur le câble de commande d'un dispositif de débrayage a atteint une valeur prédéterminée, qui dépend de la constante de la raideur des ressorts 156, l'effort transmis par le filet 155c à chaque coin 161 a pour effet de le chasser radialement vers l'extérieur contre un effort d'appui sur la surface 154d du composant 154, de telle sorte que les coins 161 s'échappent du filet 155c lorsque cet effort dépasse une valeur prédéterminée. Ainsi, la constante de raideur des ressorts 156 permet de calibrer l'effort maximum qui peut être exercé sur le câble d'actionnement de l'organe de débrayage.

Un bouton 162, éventuellement gradué, permet de régler l'intensité de l'effort exercé par chaque ressort 156 sur le coin 161 correspondant, c'est-à-dire, en pratique à la valeur de l'effort de traction maximal pouvant être transmis par le câble avant que les coins ne s'échappent du filet 155c.

Dans les modes de réalisation des figures 4, 5 et 8, les ressorts 56 et 156 peuvent être remplacés par des blocs d'élastomère ou tout autre élément élastique.

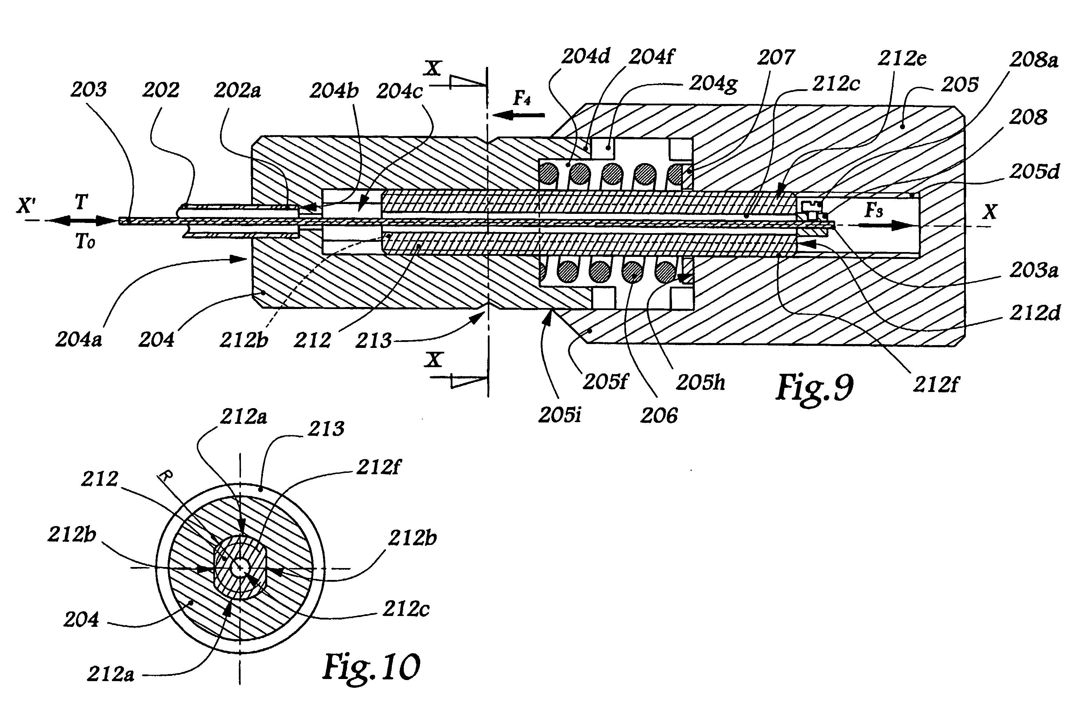

Dans le cinquième mode de réalisation de l'invention représenté aux figures 9 et 10 avec la référence 201, les éléments analogues à ceux du premier mode de réalisation portent des références identiques augmentées de 200. L'extrémité 202a d'une gaine 202 vient en appui dans un logement 204b ménagé dans la partie centrale d'une face d'extrémité 204a d'un premier composant 204 de forme globalement cylindrique centré sur un axe X-X'.

Un alésage central 204c du composant 204 est centré sur l'axe X-X' et reçoit un piston 212 de forme allongée et dont la section est inscrite dans un cercle, avec deux parties en arc de cercle 212a et deux parties rectilignes 212b. L'alésage central 204c du composant 204 a une section analogue avec des dimensions légèrement supérieures, de telle sorte que le piston 212 peut coulisser à l'intérieur de l'alésage 204c, selon la direction de l'axe X-X', sans possibilité de rotation autour de l'axe X-X'.

Le piston 212 est percé d'un alésage central 212c dans lequel est engagé le câble 203 dont l'extrémité 203a est rendue solidaire d'un serre-câble 208 équipé d'une vis de blocage 208a, le serre-câble 208 reposant contre une surface d'extrémité 212d du piston 212.

Un second composant 205 en forme de manchon est prévu pour être disposé autour d'une partie 212e du piston 212 qui dépasse de l'alésage 204c du premier composant. Le composant 205 comprend un taraudage central 205d prévu pour coopérer avec un filet 212f formé sur les parties en arc-de-cercle 212a du piston 212. Il est ainsi possible de visser ou de dévisser le composant 205 par rapport au piston 212.

Un ressort 206 est intercalé entre les composants 204 et 205. Plus précisément, l'alésage 204c forme à proximité de son débouché une chambre 204d dans laquelle peut être reçu le ressort 206, ce ressort étant en appui, du côté opposé à l'alésage 204c, contre une rondelle 207 alors qu'il est disposé autour du piston 212. Le composant 205 se prolonge par une jupe 205f qui entoure le ressort 206 et l'extrémité 204f du composant 204 opposé à la face 204a, ce qui permet de protéger la chambre 204d et le ressort 206 contre les salissures et évite qu'un utilisateur ne se coince les doigts en manoeuvrant le dispositif.

Une marque 213 est formée par enlèvement de matière à la périphérie du composant 204, avec une configuration annulaire. La marque 213 peut être obtenue par d'autres techniques, par exemple par apposition d'une encre ou équivalent, sur tout ou partie de la périphérie du composant 204, ou par écrasement.

Par ailleurs, la face annulaire du composant 204 opposé à la face 204 porte une denture 204g orientée en direction de la rondelle 207 et apte à coopérer avec une denture 205g prévue sur la face en regard 205h du composant 205, radialement autour de la rondelle 207.

Le fonctionnement est le suivant :

A partir de la position représentée à la figure 9 et lorsqu'il convient d'exercer un effort de traction sur le câble 203 afin d'actionner l'organe de débrayage de l'installation, le composant 205 est vissé sur le piston 212, ce qui a pour effet de faire progresser le piston 212 à l'intérieur du taraudage 205d comme représenté par la flèche F₃. Ceci a également pour effet d'augmenter la tension T du câble 203, cette tension exerçant sur la face 212d du piston 212 un effort tendant à le ramener vers le fond de l'alésage 204c en entraînant avec lui le composant 205 du fait de la coopération du taraudage 205d et du filet 212f et ce, à l'encontre d'un effort de rappel élastique exercé par le ressort 206 sur la rondelle 207, c'est-à-dire sur le composant 205.

En d'autres termes, plus on visse le composant 205 sur le piston 212, plus on génère un effort de tension dans le câble 203 et plus on déplace le composant 205 dans le sens de la flèche F₄ à la figure 9 à l'encontre d'un effort de rappel exercé par le ressort 206, la valeur de cet effort de rappel étant calibrée par un choix adapté de ce ressort.

Ce mode de réalisation présente l'avantage particulier qu'aucun effort de torsion n'est généré sur le câble 203 du fait des mouvements de vissage ou de dévissage du composant 205 sur le piston 212, ce qui permet d'améliorer la durée de vie de ce câble.

La rondelle 207 est facultative mais permet d'éviter que l'extrémité du ressort 206 ne marque ou ne pénètre superficiellement dans la face radiale 205h du composant 205 contre laquelle elle reposerait en l'absence d'une telle rondelle, cette face radiale étant animée d'un mouvement de rotation par rapport au ressort 206 lors du vissage ou du dévissage du composant 205. En particulier, le perçage central de la rondelle 207 est adapté à la section du piston 212, de telle sorte que ces éléments sont solidaires en rotation. Ainsi, la rondelle 207 n'est pas entraînée en rotation autour de l'axe X-X' malgré son contact avec le composant 205. Il n'existe donc pas de glissement relatif entre le ressort 206 et la rondelle 207 qui aurait tendance à déformer ce ressort.

Compte tenu du mouvement du composant 205 vers la gauche de la figure 9, ce mouvement peut être utilisé pour qu'un utilisateur repère qu'un effort de traction suffisant est exercé sur le câble 203. Ceci est effectué grâce à un positionnement adéquat de la marque 213, la constante de raideur du ressort 206 pouvant être choisie de telle sorte que l'extrémité avant 205i du composant 205 atteigne la marque 213 lorsque l'effort de traction exercé sur le câble 203 atteint une valeur T₀ prédéterminée.

Selon un autre aspect complémentaire du précédent, on peut prévoir que les dentures 204g et 205g entrent en contact lorsque la valeur T₀ est atteinte, ce qui produit un effet sonore de cliquetis aisément repérable par un utilisateur. Selon la forme des dentures 204g et 205g, on peut également prévoir qu'elles coopèrent pour bloquer en rotation le composant 205 par rapport aux éléments 204 et 212, ce qui permet également de limiter l'effort de traction exercé sur le câble 203.

Selon une variante non représentée de l'invention, les dentures 204g et 205g peuvent être positionnées de telle sorte qu'elles interagissent uniquement dans le cas où l'utilisateur a dépassé la marque 213 avec l'extrémité 205i du composant 205, à titre de sécurité.

Quel que soit le mode de réalisation représenté, l'élément portant un taraudage ou l'élément portant un filet peut être relié avec la gaine ou avec le câble, et ce au moyen d'une simple inversion de structure par rapport aux exemples représentés.

## Revendications

1. Installation de fermeture ou de protection solaire comprenant :
- un dispositif d'actionnement (1 ; 51 ; 101 ; 151 ; 201) d'un organe de débrayage pour un motoréducteur d'entraînement en rotation d'un tube d'enroulement et
- un câble d'actionnement (3 ; 203) dont une première extrémité est reliée audit organe de débrayage et dont une seconde extrémité (3a ; 203a) est reliée audit dispositif d'actionnement,
**caractérisée en ce que** ledit dispositif d'actionnement (1; 51; 101; 151; 201) comprend au moins un élément élastique (6 ; 56 ; 106 ; 156 ; 206) exerçant sur ledit câble un effort calibré (T₀) en fonction de la configuration dudit dispositif d'actionnement.

2. Installation selon la revendication 1, **caractérisée en ce que** ledit dispositif d'actionnement porte des moyens (7, 9b ; 60 ; 110 ; 161 ; 213 ; 204g; 205g) de signalisation permettant à un utilisateur de savoir que ledit effort calibré (T₀) est exercé sur ledit câble (3 ; 203).

3. Installation selon l'une des revendications 1 ou 2, **caractérisée en ce que** ledit dispositif d'actionnement comprend deux composants (4, 5 ; 54, 55 ; 104, 105 ; 154, 155 ; 204, 205) mobiles l'un par rapport à l'autre, une gaine (2 ; 202) entourant ledit câble (3 ; 203) étant reliée à un premier composant (4 ; 54 ; 104 ; 154 ; 204) alors que ledit câble est apte à être déplacé par rapport à ladite gaine par le second composant (5 ; 55 ; 105 ; 155 ; 205), ledit élément élastique (6 ; 56 ; 106 ; 156 ; 206) étant apte à exercer sur ledit câble un effort variable en fonction de la position relative desdits deux composants.

4. Installation selon la revendication 3, **caractérisée en ce que** lesdits premier et second composants (5, 5 ; 54, 55 ; 104, 105 ; 154, 155 ; 204, 205) sont mobiles l'un par rapport à l'autre grâce à une liaison de type vis-écrou, des moyens (7, 9a ; 10, 60 ; 161, 213, 204g, 205g) étant prévus pour le repérage d'un déplacement relatif desdits premier et second composant avec une course prédéterminée.

5. Installation selon l'une des revendications précédentes, **caractérisée en ce que** ledit dispositif d'actionnement comprend un premier composant (4) formant une surface de butée (4b) d'une extrémité (2a) d'une gaine (2) entourant ledit câble (3) et un second composant (5) vissé sur ou dans ledit premier composant, ledit second composant étant percé d'un canal longitudinal (5d) de passage dudit câble, la seconde extrémité (3a) dudit câble étant solidaire d'un poussoir (8) apte à comprimer un ressort hélicoïdal (6) disposé autour dudit câble, sur une face (5e) dudit second composant opposée audit premier composant.

6. Installation selon la revendication 5, **caractérisée en ce que** ledit dispositif d'actionnement comprend une coiffe (9) entourant ladite seconde extrémité (3a) dudit câble, ladite coiffe étant équipée d'une fenêtre (9a) de visualisation de la position dudit poussoir (8) et/ou d'un élément associé (7) par rapport à ladite face (5e) dudit second composant.

7. Installation selon l'une des revendications 1 à 4, **caractérisée en ce que** ledit dispositif d'actionnement comprend un premier composant (54 ; 104 ; 154) formant surface de butée d'une extrémité d'une gaine entourant ledit câble et un second composant (55 ; 105 ; 155) solidaire de ladite seconde extrémité dudit câble, lesdits premier et second composants étant vissés par des moyens (60 ; 110 ; 161) reliés à l'un (54 ; 104 ; 154) desdits composants et chargés radialement (56 ; 106 ; 156), en direction d'un filet (55c ; 105c ; 155c) ou d'un taraudage prévu sur l'autre composant (55 ; 105 ; 155).

8. Installation selon la revendication 7, **caractérisée en ce que** ledit dispositif d'actionnement comprend des billes (60 ; 110) montées sur l'un (54 ; 104) desdits composants et chargées radialement (56 ; 106) vers l'axe de symétrie (X-X') dudit filet (55c ; 105c) de façon à coopérer avec ledit filet prévu sur l'autre composant (55 ; 105).

9. Installation selon la revendication 7, **caractérisée en ce que** ledit dispositif d'actionnemetn comprend au moins un coin (161) de forme extérieure (161d) globalement tronconique chargé élastiquement (156), selon une direction parallèle à un axe longitudinal (X-X') d'un filet (155c) de l'un (55) desdits composants, contre une surface tronconique complémentaire (154d) de l'autre composant (154).

10. Installation selon l'une des revendications 1 à 4, **caractérisée en ce que** ledit dispsoitif d'actionnement comprend un premier composant (204), formant surface de butée (204b) d'une extrémité (202a) d'une gaine (202) entourant ledit câble (203) et pourvu d'un alésage central (204c) de coulissement d'un piston (212) cinématiquement lié à ladite seconde extrémité (203a) dudit câble, et un second composant (205) apte à être vissé sur un ou dans ledit piston, un ressort de compression (206) étant disposé entre lesdits premier et second composants.

11. Installation selon la revendication 10, **caractérisée en ce que** ledit piston (212) est guidé en translation (F₃) dans ledit alésage (204c) sans possibilité de rotation par rapport audit premier composant (204).

12. Installation selon l'une des revendications 10 ou 11, **caractérisée en ce que** l'un (204) desdits composants porte une marque (213) de repérage du déplacement relatif (F₄) du second composant (205).

13. Installation selon l'une des revendications 10 à 12, **caractérisée en ce que** lesdits premier et second composants (204, 205) sont pourvus de dentures (204g, 205g) prévues pour venir en prise ou en butée en fonction d'un déplacement relatif (F₄) desdits premier et second composants.

14. Installation selon l'une des revendications 10 à 13, **caractérisée en ce que** ledit ressort de compression (206) est en appui contre une rondelle (207) disposée autour dudit piston (212) et contre une surface (205h) de l'un (205) desdits composants en regard de l'autre composant (204).

15. Installation selon l'une des revendications précédentes, **caractérisée en ce que** ledit dispositif d'actionnement comprend des moyens de réglage (162) de la valeur dudit effort calibré (T₀).

## Patentansprüche

1. Schließ- oder Sonnenschutzeinrichtung umfassend
- eine Betätigungsvorrichtung (1; 51; 101; 151; 201) eines Entkupplungsorgans für einen Getriebemotor zum Antreiben eines Bewicklungsrohrs zu seiner Drehung und
- ein Betätigungskabel (3; 203), dessen erstes Ende mit dem Entkupplungsorgans und dessen zweites Ende (3a; 203a) mit der Betätigungsvorrichtung verbunden ist,
**dadurch gekennzeichnet, dass** die Betätigungsvorrichtung (1; 51; 101; 151; 201)mindestens ein elastisches Element (6; 56; 106; 156; 206) umfasst, das auf das Kabel eine Kraft (Tₒ) aufbringt, die in Abhängigkeit von der Gestaltung der Betätigungsvorrichtung bemessen ist.

2. Einrichtung nach Anspruch 1, **dadurch gekennzeichnet, dass** die Betätigungsvorrichtung Mittel (7; 9b; 60; 110; 161; 213; 204g; 205g) zum Anzeigen trägt, die einem Benutzer ermöglichen zu wissen, dass die bemessene Kraft (Tₒ) auf das Kabel (3; 203) ausgeübt wird.

3. Einrichtung nach einem der Ansprüche 1 oder 2, **dadurch gekennzeichnet, dass** die Betätigungsvorrichtung zwei zueinander bewegliche Bestandteile (4; 5; 54; 55; 104; 105; 154; 155; 204; 205) umfasst, wobei ein das Kabel (3; 203) umgebender Mantel (2; 202) mit einem ersten Bestandteil (4; 54; 104; 154; 204) verbunden ist, während das Kabel in Bezug auf den Mantel von dem zweiten Bestandteil (5; 55; 105; 155; 205) verschiebbar ist, wobei das elastische Element (6; 56; 106; 156; 206) geeignet ist, auf das Kabel eine variable Kraft in Abhängigkeit von der relativen Stellung der zwei Bestandteile auszuüben.

4. Einrichtung nach Anspruch 3, **dadurch gekennzeichnet, dass** der erste und zweite Bestandteil (4; 5; 54; 55; 104; 105; 154; 155; 204; 205) dank einer Schrauben-Mutter Verbindung zueinander beweglich sind, wobei Mittel (7; 9a; 10; 60; 161; 213; 204g; 205g) zur Ortung einer relativen Verschiebung des ersten und zweiten Bestandteils mit einem vorbestimmten Weg vorgesehen sind.

5. Einrichtung nach einem der vorhergehenden Ansprüche, **dadurch gekennzeichnet, dass** die Betätigungsvorrichtung einen ersten Bestandteil (4), der eine Anschlagfläche (4b) für ein Ende (2a) eines das Kabel (3) umgebenden Mantels (2) und einen zweiten Bestandteil (5) umfasst, der auf oder in den ersten Bestandteil geschraubt wird, wobei der zweite Bestandteil von einem Längskanal (5d) für den Durchgang des Kabels durchbohrt ist, wobei das zweite Ende (3a) des Kabels fest mit einem Mitnehmer (8) verbunden ist, der geeignet ist, eine um das Kabel herum angeordnete Spiralfeder (6) gegen eine Fläche (5e) des zweiten Bestandteils zu komprimieren, die zum ersten Bestandteil abgewandt ist.

6. Einrichtung nach Anspruch 5, **dadurch gekennzeichnet, dass** die Betätigungsvorrichtung eine kappe (9) enthält, die das zweite Ende (3a) des Kabels umgibt, wobei die Kappe mit einem Sichtfenster (9a) für die Position des Mitnehmers (8) und/oder eines zugeordneten Elementes (7) in Bezug auf die Fläche (5e) des zweiten Bestandteils versehen ist.

7. Einrichtung nach einem der Ansprüche 1 bis 4,
**dadurch gekennzeichnet, dass** die Betätigungsvorrichtung einen ersten Bestandteil (54; 104; 154), der eine Anschlagfläche für ein Ende eines das Kabel umgebenden Mantels und einen zweiten Bestandteil (55; 105; 155) umfasst, der fest mit dem zweiten Ende des Kabels verbunden ist, wobei der erste und zweite Bestandteil durch Mittel (60; 110; 161) verschraubt sind, die mit einem (54; 104; 154) der Bestandteile verbunden sind und radial (56; 106; 156) in Richtung eines an dem anderen Bestandteil (55; 105; 155) vorgesehenen Gewindes (55c; 105c; 155c) oder Innengewinde vorgespannt sind.

8. Einrichtung nach Anspruch 7, **dadurch gekennzeichnet, dass** die Betätigungsvorrichtung Kugeln (60; 110) umfasst, die an einem (54; 104) der Bestandteile montiert sind und radial (56; 106) zur Symmetrieachse (X-X') des Gewindes (55c; 105c) vorgespannt sind, um mit dem an dem anderen Bestandteil (55; 105) vorgesehenen Gewinde zusammenzuarbeiten.

9. Einrichtung nach Anspruch 7, **dadurch gekennzeichnet, dass** die Betätigungsvorrichtung mindestens einen Keil (161) mit einer im wesentlichen kegelstumpfartigen Außenform (161d) umfasst, der entsprechend einer Richtung parallel zur Längsachse (X-X') eines Gewindes (155c) eines (55) der Bestandteile gegen eine komplementäre kegelstumpfformige Fläche (154d) des anderen Bestandteils (154) elastisch vorgespannt (156) ist.

10. Einrichtung nach einem der Ansprüche 1 bis 4, **dadurch gekennzeichnet, dass** die Betätigungsvorrichtung einen ersten Bestandteil (204), der eine Anschlagfläche (204b) für ein Ende (202a) eines das Kabel (203) umgebenden Mantels (202) bildet und mit einer Mittelbohrung (204c) zum Verschieben eines kinematisch mit dem zweiten Ende (203a) des Kabels verbundenen Kolbens (212) versehen ist und einen zweiten Bestandteil (205) umfasst, der geeignet ist, auf einen oder in den Kolben geschraubt zu werden, wobei eine Kompressionsfeder (206) zwischen dem ersten und zweiten Bestandteil angeordnet ist.

11. Einrichtung nach Anspruch 10, **dadurch gekennzeichnet, dass** der Kolben (212) in der Bohrung (204c) translatorisch (F₃) ohne die Möglichkeit der Drehung in Bezug auf den ersten Bestandteil (204) geführt ist.

12. Einrichtung nach einer der Ansprüche 10 oder 11, **dadurch gekennzeichnet, dass** einer (204) der Bestandteile eine Markierung (213) zur Ortung der relativen (F₄) Verschiebung des zweiten Bestandteils (205) trägt.

13. Einrichtung nach einem der Ansprüche 10 bis 12, **dadurch gekennzeichnet, dass** der erste und zweite Bestandteil (204; 205) mit Verzahnungen (204g; 205g) versehen sind, die vorgesehen sind, um in Eingriff oder auf Anschlag abhängig von einer relativen Verschiebung (F₄) des ersten und zweiten Bestandteils zu kommen.

14. Einrichtung nach einem der Ansprüche 10 bis 13, **dadurch gekennzeichnet, dass** die Kompressionsfeder (206) sich gegen eine Scheibe (207) abstützt, die um den Kolben (212) herum und gegen eine Fläche (205h) eines (205) der Bestandteile in Gegenüberstellung zum anderen Bestandteil (204) angeordnet ist.

15. Einrichtung nach einem der vorhergehenden Ansprüche, **dadurch gekennzeichnet, dass** die Betätigungsvorrichtung Mittel (162) zum Einstellen des Wertes der bemessenen Kraft (Tₒ) aufweist.

## Claims

1. Closure device or solar protection equipment comprising:
- an actuator device (1, 51, 101, 151, 201) of an uncoupling device for a geared motor drive rotating a roller tube, and
- an actuating cable (3, 203), one end of which is connected to the aforesaid uncoupling device and the other end of which (3a, 203a) is connected to the aforesaid actuating device,
**characterised in that** the aforesaid actuating device (1, 51, 101, 151, 201) comprises at least one spring unit (6, 56, 106, 156, 206) exerting a calibrated tension (T₀) on the aforesaid cable according to the configuration of the aforesaid actuator device.

2. Device in accordance with claim 1, **characterised in that** the aforesaid actuator device has signalling means (7, 9b, 60, 110, 161, 213, 204g, 205g), which lets the user know that the aforesaid calibrated tension (T₀) is being exerted on the aforesaid cable (3, 203).

3. Device in accordance with one of claims 1 or 2, **characterised in that** the aforesaid actuating device comprises two components (4, 5; 54, 55; 104, 105; 154, 155; 204, 205), which can move in relation to each other, a sheath (2, 202) surrounding the aforesaid cable (3, 203), which is connected to a first component (4, 54, 104, 154, 204), whereas the aforesaid cable is capable of being moved in relation to the aforesaid sheathing by the second component (5, 55, 105, 155, 205), with the aforesaid spring unit (6, 56, 106, 156, 206) being capable of exerting a variable tension on the aforesaid cable according to the relative position of the two aforesaid components.

4. Device in accordance with claim 3, **characterised in that** the aforesaid first and second components (5, 5; 54, 55; 104, 105; 154, 155; 204, 205) can be moved in relation to each other due to a nut and bolt type link, with means (7, 9a; 10, 60; 161, 213, 204g, 205g) being provided for marking a relative movement of the aforesaid first and second components along a predetermined course.

5. Device in accordance with one of the preceding claims, **characterised in that** the aforesaid actuating device comprises a first component (4) forming a stop surface (4b) for one end (2a) of a sheath (2) surrounding the aforesaid cable (3) and a second component (5) threaded onto or into the aforesaid first component, with the aforesaid second component being drilled with a longitudinal channel (5d) for the passage of the aforesaid cable and the second end (3a) of the aforesaid cable being integral with a pushrod (8) capable of compressing a helical spring (6) arranged around the aforesaid cable on a face (5e) of the aforesaid second component opposite the aforesaid first component.

6. Device in accordance with claim 5, **characterised in that** the aforesaid actuating device comprises a cover (9) surrounding the aforesaid second end (3a) of the aforesaid cable, with the aforesaid cover being equipped with a window (9a) for displaying the position of the aforesaid pushrod (8) and/or an associated element (7) in relation to the aforesaid face (5e) of the aforesaid second component.

7. Device in accordance with one of claims 1 to 4, **characterised in that** the aforesaid actuating device comprises a first component (54, 104, 154) forming a stop surface for one end of a sheath surrounding the aforesaid cable and a second component (55, 105, 155) integral with the aforesaid second end of the aforesaid cable, with the aforesaid first and second components being fastened by means (60, 110, 161) connected to one of the aforesaid components (54, 104, 154) and radially loaded (56, 106, 156) towards a thread (55c, 105c, 155c) or a tapped hole provided on the other component (55, 105, 155).

8. Device in accordance with claim 7, **characterised in that** the aforesaid actuating device comprises balls (60, 110) fitted on one of the aforesaid components (54, 104) and radially loaded towards the axis of symmetry (X-X') of the aforesaid thread (55c, 105c) in such a manner that it works together with the aforesaid thread provided on the other component (55, 105).

9. Device in accordance with claim 7, **characterised in that** the aforesaid actuating device comprises at least one wedge (161) with an external shape (161d) that is on the whole a truncated cone and which is elastically loaded (156) in a direction parallel to a longitudinal axis (X-X') of a thread (155c) of one (55) of the aforesaid components against a further truncated conical surface (154d) of the other component (154).

10. Device in accordance with one of claims 1 to 4, **characterised in that** the aforesaid actuating device comprises a first component (204) forming a stop surface (204b) of one end (202a) of a sheath (202) surrounding the aforesaid cable (203) and provided with a central bore (204c) for the travel of a piston (212) that is kinetically linked to the aforesaid second end (203a) of the aforesaid cable and a second component (205) capable of being screwed onto or into the aforesaid piston, with a compression spring (206) being placed between the aforesaid first and second components.

11. Device in accordance with claim 10, **characterised in that** the aforesaid piston (212) is guided in translation (F₃) in the aforesaid bore (204c) with no possibility of rotation compared with the aforesaid first component (204).

12. Device in accordance with one of claims 10 or 11, **characterised in that** one (204) of the aforesaid components has a reference mark (213) for the relative movement (F₄) of the second component (205).

13. Device in accordance with one of claims 10 to 12, **characterised in that** the aforesaid first and second components (204, 205) are equipped with teeth (204g, 205g) provided to engage or be stopped according to a relative movement (F₄) of the aforesaid first and second components.

14. Device in accordance with one of claims 10 to 13, **characterised in that** the aforesaid compression spring (206) is supported against a washer (207) arranged around the aforesaid piston (212) and against a surface (205h) of one (205) of the aforesaid components compared with the other component (204).

15. Device in accordance with one of the preceding claims, **characterised in that** the aforesaid actuating device comprises means (162) for adjusting the value of the aforesaid calibrated tension (T₀).
